Europäisches Patentamt

European Patent Office

Office européen des brevets

(11) Veröffentlichungsnummer: **0 088 261**
**B1**

(12) **EUROPÄISCHE PATENTSCHRIFT**

(45) Veröffentlichungstag der Patentschrift:
14.05.86

(21) Anmeldenummer: 83101570.6

(22) Anmeldetag: 18.02.83

(51) Int. Cl.⁴: **H 02 K 3/40**

(54) Hochspannungsisolation für rotierende elektrische Maschinen.

(30) Priorität: 02.03.82 DE 3207487

(43) Veröffentlichungstag der Anmeldung:
14.09.83 Patentblatt 83/37

(45) Bekanntmachung des Hinweises auf die Patenterteilung:
14.05.86 Patentblatt 86/20

(84) Benannte Vertragsstaaten:
AT CH FR GB LI NL SE

(56) Entgegenhaltungen:
CH - A - 547 028
DE - A - 1 156 171
DE - A - 1 763 025
DE - B - 1 015 526
DE - B - 1 665 865
DE - C - 2 206 528

(73) Patentinhaber: **Siemens Aktiengesellschaft, Berlin und München Wittelsbacherplatz 2, D-8000 München 2 (DE)**

(72) Erfinder: **Rotter, Hans-Werner, Dipl.-Met., Akazienstrasse 4, D-8501 Wendelstein (DE)**
Erfinder: **Eckbauer, Leopold, Dipl.-Ing., Sigmund-Schuckert-Strasse 62, D-8501 Schwanstetten (DE)**

ACTORUM AG

## Beschreibung

Die Erfindung betrifft eine Hochspannungsspulenisolation von rotierenden elektrischen Maschinen, bestehend aus einem mit aushärtbarem Bindeharz und Glimmer beschichteten, unter Temperatureinfluss schrumpfenden organischen Trägermaterial, die um sämtliche Teile der Spule gewickelt ist und dieser durch Schrumpfen zusammenpresst.

Eine solche Hochspannungsisolation ist aus der DE-B-16 65 865 bekannt. Das dort beschriebene ohne Vorzugsrichtung schrumpffähige Isoliermaterial ist sowohl als Breitband für die Umpressung der in die Nuten eingelegten geraden Spulenteile als auch als schmäleres Band für die ausserhalb der Nuten liegenden gekrümmten Spulenkopfteile vorgesehen und besteht aus einer harzundurchlässigen schrumpffähigen Trägerfolie, auf die ein Binde- oder Klebeharz aufgebracht und dieses durch eine saugfähige Glimmerfolie (Glimmerpapier) kaschiert ist. Der Anteil des Bindeharzes beträgt im Mittel etwa 30% des Gesamtgewichtes des Isoliermaterials.

Für die Umpressung benutztes derartiges Isoliermaterial kann gegebenenfalls ohne Bügeln in sich faltenfrei aufgebracht werden und unter Druck und Wärmeeinfluss können auch die aussenseitigen Zwickel und Unebenheiten der von der Umpressung umgebenden Leiterverbandsisolation aus Bandmaterial gleichen Aufbaus durch diese Umpressung ausgeglichen werden.

Dagegen traten Schwierigkeiten bei der Isolierung der gekrümmten Spulenteile, insbesondere der Übergangsbereiche zwischen diesen und den mit Umpressung versehenen Spulenteilen sowie an nachträglich zu isolierenden Schaltstellen auf.

Bei Hochspannungsisolatoren für Spannungen vorwiegend über 1000 Volt birgt die erforderliche höhere Lagenzahl des im Übergangsbereich und im Spulenkopfteil verwendeten Bandmaterials die Gefahr einer nicht mehr beseitigbaren Faltenbildung, zumal ein Pressen und Bügeln dieser Spulenteile nicht möglich ist. Es entstehen somit die Überschlagsfestigkeit der Spulen beeinträchtigende Durchschlagskanäle, die beim Prüfen der Maschine mit Prüfspannung oder bei betrieblichen Stossspannungsbeanspruchungen zu Fehlerstellen in der Isolation führen können.

Aus der DE-B-10 15 526 ist eine Umpressung aus zwei nacheinander in die Nutenteile gewickelten, ohne Vorzugsrichtung bis zu 7% schrumpffähigen glimmfreien Isolationen bekannt, bei der die bewickelte Spule in Lack getaucht und getrocknet wird, wobei die besagte Schrumpfung eintritt.

Aus der DE-A-11 56 171 ist weiterhin eine nur für Umpressungen vorgesehene Hochspannungsisolation bekannt, bei der das ohne Vorzugsrichtung schrumpfende Bandmaterial aus Glimmer mit aufgeschrumpftem Träger besteht, das nach Schrumpfen der Umpressung mit Bindeharz getränkt und ausgehärtet wird.

Aus der DE-A-17 63 025 ist eine für Nutteile und Spulenkopfteile vorgesehene Spulenisolation bekannt, bei der die eigentliche anorganische nichtschrumpffähige Isolation von einer ohne Vorzugsrichtung schrumpffähige organische Decklage mit Glimmer und Bindeharz umgeben ist. Das Schrumpfen der Decklage wird durch chemische Lösungsmittel bewirkt, das durch Wärmeeinflüsse beschleunigt werden kann. Der Schrumpfbeginn wird dabei durch die chemischen Lösungsmittel ausgelöst.

Schliesslich ist aus der CH-A-547 028 eine Glimmerschutzfolie aus in Längsrichtung bis zu 12% schrumpffähigem glimmerfreiem organischem Material bekannt, die auf die nichtschrumpffähigen anorganischen Spulenisolation an den Nutenteilen aufgebracht ist. Erst nach dem Aufschrumpfen der Glimmerschutzfolie erfolgt die Imprägnierung des spulenbelegten Eisenpakets mit haltbarem Kunstharz.

Der Erfindung liegt die Aufgabe zugrunde, eine auf die ganze Spule aufbringbare einheitliche Hochspannungsisolation für Spulen von isolierenden elektrischen Maschinen zu schaffen, die auch an den Übergangsstellen und Schaltstellen einen faltenfreien Zustand bei einfacher Verarbeitung ohne die Gefahr einer Beschädigung der Glimmerschicht beim Schrumpfen des organischen Trägermaterials ermöglicht.

Die Lösung der gestellten Aufgabe für eine Hochspannungsspulenisolation gemäss Oberbegriff von Anspruch 1 gelingt nach der Erfindung dadurch, dass das Trägermaterial in Wickelrichtung um 8% bis 30% und in Querrichtung höchstens 5% vorgereckt ist und eine Schrumpfauslösetemperatur im Bereich der Erweichungstemperatur des festen Bindeharzes im ungehärteten Zustand aufweist, wobei das Trägermaterial vor Erreichen des ausgehärteten Zustandes des Bindeharzes voll geschrumpft und in diesem Zustand durch das ausgehärtete Bindeharz fixiert ist.

Als Trägermaterial dient vorzugsweise eine Polyesterfolie oder ein Polyestergewebe. Bei Gewebebändern sind die Kettfäden um 8% bis 30% vorgereckt, wogegen die Schussfäden höchstens um 5% vorgereckt sind.

Es hat sich gezeigt, dass Längsschrumpfungen unter 8% keine in allen Fällen ausreichende Faltenbeseitigung erlauben und Längsschrumpfungen über 30% zu Stauchungen der dünnen empfindlichen Glimmerschicht führen, was zu Hohlraumbildungen, Rissen oder anderen Beschädigungen der Glimmerschicht führen kann. Auch die Verwendung von Trägermaterial von in beiden Richtungen etwa gleichgrossen Schrumpfungen führt zu solchen Nachteilen, selbst dann, wenn die Schrumpfungen in den genannten Bereichen zwischen 8% und 30% liegen. Es ist daher eine wesentlich zu erfüllende Forderung, dass die Querschrumpfung, wenn überhaupt zugelassen, kleiner als die kleinstzulässige Längsschrumpfung sein muss.

Zur einwandfreien Verarbeitung des Isoliermaterials muss ausserdem noch die zweite Bedingung erfüllt sein, die darin besteht, dass das Bindeharz in aufgebrachtem Zustand der Isolation bei der nachfolgenden Wärmebehandlung in seiner Erweichungstemperatur und seiner Reaktionstemperatur mit dem auf die bewickelte Spule nachträglich aufgebrachten Imprägnierharz so abgestimmt ist, dasss mit dem Erweichen des Bindeharzes auch die Schrumpfung einsetzt und vor dem Aushärten bereits beendet ist, so dass der Schrumpfzustand des Trägermaterials durch die Aushärtung des Binde- und Imprägnierharzes fixiert bleibt und nicht mehr verändert werden kann.

Als Binde- oder Klebeharze dienen Harze, die im ungehärteten Zustand bei der zur Auslösung der Schrumpfung des Trägermaterials notwendigen Auslösetemperatur eine solche Erweichung, d.h. Viskositätsherabsetzung erfahren, dass die Trägermaterialien in allen Lagen der Hauptisolierung der Spulen aufeinander gleitend schrumpfen können. Die Auslösetemperatur beginnt bei Polyesterträgermaterial etwa bei 110°C und reicht bis nahe an die Aushärtetemperatur von etwa 180°C für das Bindeharz-Imprägnierharzgemisch, bei dem dieses in den ausgehärteten Zustand gebracht wird und die vollendete Schrumpfung des Trägermaterials fixiert.

Für elektrische Maschinen mit einer Nennspannung von 10 kV werden z.B. Hochspannungsisolationen vorgesehen, die eine 30μm dicke Polyesterfolie mit einer geringfügigen Querschrumpfung bis zu 2% und einer Längsschrumpfung von etwa 23% enthalten, auf die ein in Azeton gelöster Epoxynovolack mit einem Härteranteil von 2% bis 3% BF$_3$–400 (Borfluorid) in einer etwa 30% des Gesamtgewichtes der ausgehärteten Hochspannungsisolation entsprechenden Menge aufgetragen und diese mit einem 50μm dicken Glimmerpapier kaschiert wird. Dieses Isolationsmaterial durchläuft eine Wärmestrecke von etwa 70°C zum Verdunsten des Lösemittels Azeton. Das lösungsmittelfreie Isolationsmaterial mit im B-Zustand befindlichen Bindeharz wird als Breitbahnmaterial um den geraden Nutteil der Spule und als Bandmaterial um den Spulenkopfteil und den Übergangsbereich von Hand oder maschinell unter Zug fest aufgewickelt, wobei unvermeidliche Wickelfalten und Zwickel entstehen.

Die so isolierten Spulen werden in die Nuten des Ständerblechpaketes eingelegt, die Spulen am abisolierten Spulenkopfteil zusammengeschaltet und diese Schaltstellen mit dem gleichen Bandmaterial nachisoliert.

Danach wird der bewickelte Ständer mit aushärtbarem Imprägnierharz imprägniert und in einem Ofen auf 150° bis 180°C erwärmt. Ab 120°C erweicht das Bindeharz (Epoxynovolack) und das Trägermaterial beginnt zu schrumpfen, wobei die Falten sich glätten und die Zwickel zwischen den Teilleitern und im Übergangsbereich zur Umpressung des Nutteils sich mit dem Bindeharz füllen. Mit zunehmender Erwärmung auf 150°C und darüber beginnen das Bindeharz und das Imprägnierharz zu gelieren und in den festen A-Zustand überzugehen, wobei die endgültige Aushärtung erfolgt, wenn der Schrumpfvorgang des Trägermaterials bereits beendet ist.

Die gemessene Stossspannungsfestigkeit liegt im Mittel bei etwa 68 kV, bei einem Mindestwert von 58 kV für eine 10 kV-Maschine, wogegen die bisherigen Stossspannungswerte mit dem bekannten Hochspannungsmaterial für solche Maschinen bei nur 45 kV im Mittel und bei 34 kV Mindestwert liegen.

## Patentansprüche

1. Hochspannungsspulenisolation von rotierenden elektrischen Maschinen, bestehend aus einem mit aushärtbarem Bindeharz und Glimmer beschichteten, unter Temperatureinfluss schrumpfenden organischen Trägermaterial, die um sämtliche Teile der Spule gewickelt ist und diese durch Schrumpfen zusammenpresst, dadurch gekennzeichnet, dass das Trägermaterial in Wickelrichtung um 8% bis 30% und in Querrichtung höchstens 5% vorgereckt ist und eine Schrumpfauslösetemperatur im Bereich der Erweichungstemperatur des festen Bindeharzes im ungehärteten Zustand aufweist, wobei das Trägermaterial vor Erreichen des ausgehärteten Zustandes des Bindeharzes voll geschrumpft und in diesem Zustand durch das ausgehärtete Bindeharz fixiert ist.

2. Hochspannungsisolation nach Anspruch 1, dadurch gekennzeichnet, dass als Trägermaterial Polyester und als Bindeharz ein in Azeton gelöster und mit einem BF$_3$-Härter versetzter Epoxynovolack vorgesehen ist.

3. Hochspannungsisolation nach Anspruch 1 und 2, dadurch gekennzeichnet, dass auf eine 30μm dicke Polyesterfolie, die in Längsrichtung um 23% und in Querrichtung um 2% vorgereckt ist, der in Azeton gelöste und mit einem Härteanteil von 2% bis 3% versetzte Epoxynovolack mit einer Erweichungstemperatur von 120°C und einer Aushärtetemperatur von 160°C bis 180°C im Gesamtgewichtsanteil von etwa 30% aufgebracht und von einem 50 μm dicken Glimmerpapier kaschiert ist, als Breitbahn und/oder Band mehrlagig um die Spulen unter Zug gewickelt ist und die isolierte Wicklung in das Blechpaket eingebracht und diese Anordnung nach Imprägnieren mit einem Imprägnierharz einer bei 120°C beginnenden und bei höchstens 180°C endenden Wärmebehandlung ausgesetzt ist, bei der die Schrumpfung beendet und durch Aushärten des Harzes fixiert ist.

## Claims

1. High voltage winding insulation of rotatable electrical machines, comprising a heat-shrinkable organic carrier material coated with hardenable bonding resin and mica, which is wound round all the parts of the winding and compresses these by shrinkage, characterised in that the carrier material is pre-stretched in the winding direction by 8% to 30% and in the transverse direction by 5% at the most, and has a shrinkage initiation temperature in the temperature range for softening the solid bonding resin in the unhardened state, whereby the carrier material is completely shrunk before reaching the hardened state of the bonding resin and is fixed in this state by the hardened bonding resin.

2. High voltage insulation according to claim 1, characterised in that polyester is provided as a carrier material, and an epoxy novolack dissolved in acetone and mixed with a BF₃ hardener is used as a bonding resin.

3. High voltage insulation according to claim 1 and 2, characterised in that onnto a 30 µm thick polyester foil, which is prestretched in the longitudinal direction by 23% and in the transverse direction by 2%, there is applied in a total weight proportion of about 30%, the epoxy novolack dissolved in acetone and mixed with a proportion of hardener of 2% to 3%, and having a softening temperature of 120°C and a hardening temperature of 160°C to 180°C, and it is coated with a 50 µm thick mica paper, is wound under tension as a wide sheet and/or band in many layers round the windings, and the insulated winding is introduced into the stack of laminations and, after impregnation with an impregnating resin, this arrangement is exposed to a heat treatment beginning at 120°C and terminating at 180°C at the most, and following this treatment the shrinkage is terminated and is fixed by hardening of the resin.

## Revendications

1. Isolant pour bobine haute tension de machines électriques tournantes, constitué par un matériau organique de support recouvert par une résine formant liant durcissable et du mica et pouvant se rétracter sous l'influence de la température, et qui est enroulée autour de tous les éléments de la bobine et maintient ces éléments pressés les uns contre les autres par rétraction, caractérisé par le fait que le matériau de support est précétiré entre 8% et 30% suivant la direction de bobinage et au maximum de 5% suivant la direction transversale et possède une température de déclenchement de la rétraction au voisinage de la température de ramollissement de la résine formant liant rigide à l'état non durci, le matériau de support étant complètement rétracté avant que la résine formant liant ait atteint l'état durci, et étant fixé dans cet état par la résine-liant durcie.

2. Isolant haute tension selon la revendication 1, caractérisé par le fait qu'il est prévu comme matériau de support, du polyester et comme résine formant liant une novolaque époxy dissoute dans de l'acétone et mélangée à un durcisseur à base de BF₃.

3. Isolant haute tension suivant les revendications 1 et 2, caractérisé par le fait que la novolaque époxy dissoute dans de l'acétone et mélangée à un pourcentage de 2 à 3% de durcisseur et possédant une température de ramollissement de 120°C et une température de durcissement comprise entre 160°C et 180°C, est disposée en un pourcentage d'environ 30% par rapport au poids total sur une feuille de polyester d'une épaisseur de 30 µm, qui est préétirée de 23% suivant la direction longitudinale et de 2% suivant la direction transversale, et est recouverte de papier micacé d'une épaisseur de 50 µm qui est enroulée sous traction sur plusieurs couches, sous la forme d'un ruban large et/ou d'une bande, autour des bobines, et que l'enroulement isolé est inséré dans le paquet de tôles et que cet ensemble est soumis, après imprégnation avec une résine d'imprégnation, à un traitement thermique commençant à 120°C et se terminant au maximum à 180°C et lors duquel la rétraction est arrêtée et est fixée par durcissement de la résine.